# EUROPEAN PATENT APPLICATION

(11) **EP 1 827 012 A2**
(43) Date of publication of application: **29.08.2007**
(21) Application number: 06124779.7
(22) Date of filing: 24.11.2006
(51) Int. Cl.: H04N 5/445

(54) **Apparatus for and method of providing question-and-answer screen on OSD**

(30) Priority: 23.02.2006 KR 20060017684
(71) Applicant: SAMSUNG ELECTRONICS CO., LTD., Suwon-si, Gyeonggi-do 442-742 (KR)
(72) Inventor: Jo, Gye-wook 112-1502 Neulpureum Byeoksan Apt.,, Gyeonggi-do, Suwon-si (KR); Kim, Jae-hwan, SYeomchang-dong, Gangseo-gu, Seoul (KR)
(74) Representative: Waddington, Richard

(57) **Abstract**

An apparatus for and a method of providing a question-and-answer screen. A storage part (120) stores a plurality of questions related to an image or sound quality adjustment and a plurality of options corresponding to the plurality of questions, a screen generator (130) generates a question-and-answer screen including the plurality of questions and the plurality of options, and a signal processor (250) adjusts the image or sound quality based on the options which are selected through the question-and-answer screen in response to the plurality of questions. As a result, a user can easily adjust functions by using the question-and-answer screen.

## Description

Apparatuses and methods consistent with the present invention relate to a question-and-answer screen on on-screen display (OSD), and more particularly, to providing a question-and-answer screen on an OSD so that user can adjust functions with convenience.

The recent development of video technologies has brought a variety of advanced functions for video quality adjustment, and many of these functions are provided by an OSD (on-screen display).

For example, a general display apparatus provides an OSD screen in many stages so that users can select a variety of image factors such as a screen mode among contrast, brightness, sharpness, color density, hue, a background color mode among cool, warm, normal, and a contrast and a noise. Accordingly, users are able to adjust video quality by changing the set values of the respective factors.

However, while advanced users (those who have a good understanding of video quality area or at least the product manual) can utilize the OSD function, most of the average users experience difficulties and inconveniences. As a result, most of the time, the users do not adjust the settings to match their preferences, and the functions provided through the OSD are left unused.

Additionally, because users often can not manually set preferred settings for image quality , there are many complaints.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

The present invention provides a method of and an apparatus for providing a question-and-answer screen on an OSD, which has a combination screen integrating therein functions of multi-stages or screens so that users can easily adjust image quality using the provided functions.

According to the present invention there is provided an apparatus and method as set forth in the appended claims. Preferred features of the invention will be apparent from the dependent claims, and the description which follows.

According to an aspect of the present invention, an apparatus for providing a question-and-answer screen includes a storage part which is operable to store a plurality of questions related to an image or sound quality adjustment and a plurality of options for the plurality of questions, a screen generator which is operable to generate a question-and-answer screen including the plurality of questions and the plurality of options, and a signal processor which is operable to adjust the image or sound based on the options which are selected through the question-and-answer screen.

Preferably, the storage part is operable to store at least one item related to each of the questions, and a value set for the at least one item. The plurality of questions are preferably generated by combining the at least one item related to the questions, and the plurality of options are preferably generated by combining the values set for the at least one item.

The plurality of questions and the plurality of options may be stored in the storage part in the form of a lookup table.

A controller may also be provided to control the storing of the selected options into the storage part.

Preferably, the plurality of options for each of the plurality of questions are expressed by at least two hierarchical levels, and these at least two levels may be expressed by one of: high/low, strong/weak, and upper/lower.

The screen generator is preferably operable to generate the question-and-answer screen as an OSD menu.

The question-and-answer screen, which is being signal-processed, is preferably displayed through either a built-in display or a removable display.

The plurality of questions related to the image adjustment are preferably provided to adjust luminance, brightness, contrast, sharpness, noise, low tone, white balance and color.

According to another aspect of the present invention, a method of providing a question-and-answer screen is provided. The method includes receiving a request signal for a question-and-answer screen including therein a plurality of questions related to an image or sound quality adjustment, and a plurality of options corresponding to each of the plurality of questions, processing the requested question-and-answer screen into a displayable signal, displaying the signal-processed question-and-answer screen, selecting the options for each of the plurality of questions through the displayed question-and-answer screen, and performing the image or sound quality adjustment based on the options selected for each of the questions.

Storing the options selected for each of the questions may also be provided.

The plurality of questions are generated by combining the at least one item related to the questions, and the plurality of options are generated by combining the values set for the at least one item.

For a better understanding of the invention, and to show how embodiments of the same may be carried into effect, reference will now be made, by way of example, to the accompanying diagrammatic drawings in which:
FIG. 1 is a schematic block diagram of an apparatus for providing a question-and-answer screen on an OSD according to a first exemplary embodiment of the present invention;
FIG. 2 is a schematic block diagram of an apparatus for providing a question-and-answer screen on an OSD according to a second exemplary embodiment of the present invention;
FIG. 3A illustrates an initial OSD screen generated by a screen generator 2 and provided by an indicating part according to an exemplary embodiment of the present invention;
FIG. 3B illustrates a setting SCREEN mode at an initial OSD screen according to an exemplary embodiment of the present invention;
FIG. 3C illustrates accessing a question-and-answer screen from an initial OSD screen, which is provided as a user set mode, according to an exemplary embodiment of the present invention; and
FIG. 4 is a flowchart illustrating a method of providing a question-and-answer screen on an OSD according to an exemplary embodiment of the present invention.

Certain exemplary embodiments of the present invention will be described in greater detail with reference to the accompanying drawings.

In the following description, the same drawing reference numerals are used to designate analogous elements throughout the drawings. The matters defined in the description such as a detailed construction and elements are provided to assist in a comprehensive understanding of the invention. However, the present invention can be carried out in different manners. Also, well-known functions or constructions are not described in detail since they would obscure the invention in unnecessary detail.

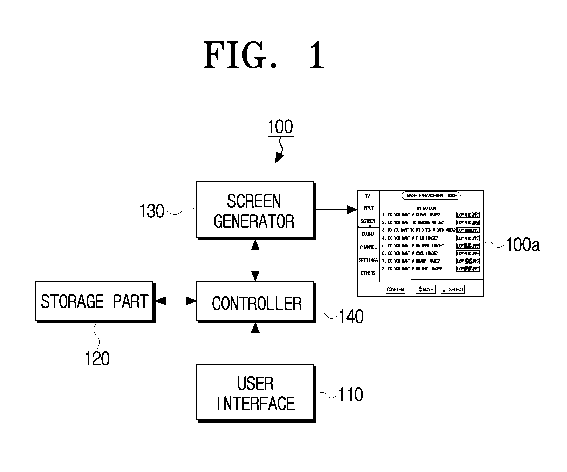

FIG. 1 is a schematic block diagram of an apparatus for providing a question-and-answer screen on OSD according to an exemplary embodiment of the present invention.

Referring to FIG. 1, an apparatus 100 for providing a question-and-answer screen on OSD according to one exemplary embodiment of the present invention includes a user interface 110, a storage part 120, a screen generator 130 and a controller 140.

The apparatus 100 for providing a question-and-answer screen according to an exemplary embodiment provides a built-in display, or a removable display (not shown) with an OSD screen, and may be implemented as a variety of adequate devices including television, DVDP (Digital Video Disk Player), Set-top box, etc.

The user interface 110 includes a plurality of key buttons which output signal to thus set or manipulate functions supported by the apparatus 100 for providing a question-and-answer screen. The user interface 110 may be positioned in a body of the apparatus 100 for providing a question-and-answer screen, or may be implemented as a remote controller transmitting wireless signal such as infrared signal. The example of using the user interface 110 provided in the body of the apparatus 100 will be explained below.

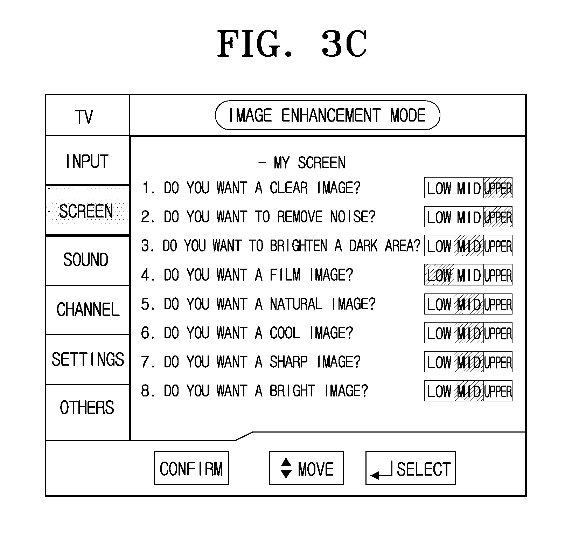

The user interface 110 outputs a request signal, requesting that a question-and-answer screen 100a be displayed (a larger view of the question-and-answer screen 100a is depicted in Fig. 3C). Through the question-and-answer screen 100a, users can interactively set a variety of functions, and to this end, the question-and-answer screen 100a provides a plurality of questions related to the available functions, and options for the provided questions. The user interface 110 accordingly selects desired options according to the questions provided by the question-and-answer screen 100a, which is displayed through the built-in display (not shown), or a removable display (not shown).

As the initial OSD screen is displayed according to the manipulation of the user interface 110, the users can enter the question-and-answer screen 100a by selecting a QUESTION/ANSWER menu from the initial OSD screen.

Alternatively, a separate enter key (not shown) may be provided to the user interface 110 so that the question-and-answer screen 100a is directly displayed while skipping the display of the initial OSD screen.

The storage part 120 stores the questions and options related to the available functions in the form of a lookup table. The options for the plurality of questions may be expressed by at least two levels. More specifically, the levels may include high and low levels, strong and weak levels, and upper and lower levels. The questions and the options may be formed by combining a plurality of sub-items related to the questions.

The screen generator 130 processes the question-and-answer screen 100a as a displayable signal, using the data stored in the storage part 120 regarding the plurality of questions and options. In an exemplary embodiment of the present invention, the screen generator 130 processes the question-and-answer screen 100a in OSD screen. The OSD screen of the question-and-answer screen 100a may include text only, or graphic only, or some combination of both.

When a display request signal is output from the user interface 110, the controller 140 reads data about the plurality of questions and related options from the storage part 120 and accordingly, controls the storage part 120 and the screen generator 130 so that the question-and-answer screen 100a can be signal-processed based on the read data.

When the question-and-answer screen 100a, signal-processed at the screen generator 130, is provided through a built-in display (not shown) or a removable display (not shown), and options for the respective questions are selected through the user interface 110 and the question-and-answer screen 100a, the controller 140 re-sets register (not shown) according to the selected options, and processes the selected options such that functions for the respective questions can be re-performed. Furthermore, the controller 140 controls the storage part 120 so that the options selected by the user interface 110 are stored in the storage part 120 together with the initially selected options.

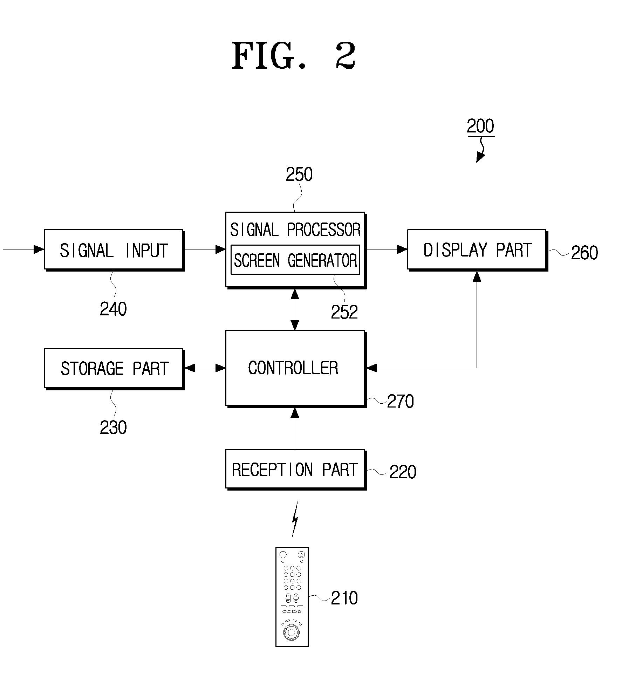

FIG. 2 is a schematic block diagram of an apparatus for providing a question-and-answer screen according to a second exemplary embodiment of the present invention.

Referring to FIG. 2, the apparatus 200 for providing a question-and-answer screen according to the second exemplary embodiment includes a user interface 210, a reception part 220, a storage part 230, a signal input 240, a signal processor 250, a display part 260 and a controller 270.

Because the user interface 210, the storage part 230 and the controller 270 as shown in FIG. 2 are somewhat similar to the user interface 110, the storage part 120 and the controller 140 described with reference to FIG. 1, detailed description of these elements will be omitted for the sake of brevity.

The apparatus 200 for providing a question-and-answer screen according to this exemplary embodiment processes an image signal from an image source to a displayable signal, and provides a variety of OSD screens. The apparatus 200 may be implemented as a variety of adequate devices including television, DVDP (Digital Video Disk Player), Set-top box, etc.

The user interface 210 includes a plurality of key buttons, which output a signal requesting that a user setting screen be displayed so that the user can directly manipulate settings related to image quality adjustments. The question-and-answer screen is a guide screen provided for the user's convenience. This guide screen indicates the functions of image quality adjustment in the form of questions and provides options for the displayed questions, as explained in greater detail below. The user interface 210 selects options for the respective questions from the question-and-answer screen displayed through the display part 260.

As the initial OSD screen is displayed according to the manipulation of the user interface 210, users can enter the question-and-answer screen by selecting a QUESTION/ANSWER menu from the initial OSD screen. The initial OSD screen is provided so that users can directly adjust set values of the respective items such as CONTRAST, BRIGHTNESS, SCREEN, etc. A separate enter key (not shown) may also be provided on the user interface 210 so that the question-and-answer screen may be directly accessed without the initial OSD screen.

The reception part 220 receives a user manipulation signal from the user interface 210 and transmits it to the controller 270.

The storage part 230 stores a plurality of questions relating to image quality adjustment functions and corresponding options in a form of a lookup table. The options may be expressed by at least two levels. For example, the levels may include high and low levels, strong and weak levels, and upper and lower levels.

In the case that the questions and the options are formed by combining a plurality of sub-items which are used to generate the questions, the storage part 230 stores a plurality of sub-items and their set values, with classifying them according to each of the questions and options. Accordingly, the storage part 230 stores a plurality of sub-items related to each of the questions, and set values of the sub-items.

The Table 1 below shows one example of a plurality of questions and a plurality of related sub-items stored in the storage part 230.

**[Table 1]**

| Image Adjustment | Questions | Items |
|---|---|---|
| 1: CONTRAST | Do you want a clear image? | WS, CE |
| 2: NOISE | Do you want to remove noise | NR, coring, LNA |
| 3: LOW TONE | Do you want to brighten dark area? | Brightness, Black Stretch |
| 4: MOVEMENT | Do you want a film image? | Pull down, IPC interpolation |
| 5: COLOR | Do you want a natural image? | Color level, CSC |
| 6: WHITE BALANCE | Do you want a cool image? | Color temperature, Blue stretch |
| 7: SHARPNESS | Do you want a sharp image? | DEP, sharpness, peaking |
| 8: LUMINANCE | Do you want a bright image? | Gamma curve, contrast |

According to the table 1, the CONTRAST RATIO may include a combination of WS (White stretch) and CE (Contrast enhancer). The WS increases the proportion of white color, and thus provides a finer white color, and the CE changes the gamma curve to 'S' configuration to thus provide a clearer image.

The NOISE may include a combination of NR (noise ratio), coring and LNA (Low Noise Amplifier). The NR compares image in terms of time and space and removes background noise. The coring removes noise from the black area of the image during decoding process, and the LNA increases signal to noise ratio (S/N) at the front end of a tuner to thus reduce the S/N.

The BRIGHTNESS, related with LOW TONE, controls the black level to express signal at the low tone area. The black stretch keeps the current black level, while adjusting the low tone curve area stronger or weaker so that the low tone expression is enhanced.

Regarding the MOVEMENT, the pull down indicates the absence or presence of 3:2 inverse pull down, and the Interlaced-to-Progressive Conversion (IPC) interpolation indicates the absence or presence of interpolation and is useful especially when the motion image looks unnatural.

Regarding the COLOR, the color level adjusts the color tone, and the CSC (Color space converter) converts YUV signal to RGB or vice versa, to differently set color coordinates.

Regarding the WHITE BALANCE, the color temperature may be a gray/white level temperature, and include cool, warm and middle mode. The blue stretch stretches bluish color among the RGB colors to thus provide a sense of coolness.

Regarding the SHARPNESS, the DEP (Detail Enhance Processor) locally enhances low, middle and high bands of the image signal to thus elaborate an image, the sharpness clarify the outlines of the image signal, and the peaking enhances low, middle and high bands and is usually performed in the decoding process.

Regarding the LUMINANCE, the gamma curve is provided to darken the image by changing gamma values or enhance an intermediate luminance, and the contrast amplifies the overall image signal and thus enhances overall luminance.

Table 2 below shows one example of lookup table which lists the first one of the questions stored in the storage part 230, a plurality of items needed to form the first question, sub-items related with each of the items, and level of the respective sub-items.

**[Table 2]**

| Question | Items | Sub-items | Low-level | Mid-level | Upper-level | Selected option |
|---|---|---|---|---|---|---|
| Do you want a clear image? | WS | Tilt | 70 | 80 | 90 | Upper level |
| | | Gain | 330 | 350 | 380 | |
| | CE | Upper gain | 10 | 20 | 30 | |
| | | Lower gain | 10 | 20 | 30 | |

Referring to Table 2, there are WS and CE items each including the sub-items of low, mid and upper levels, set for the question, "Do you want a clear image?" The respective levels are also set to appropriate values. The tilt, gain, upper gain and lower gain are set to lower values to decrease the sharpness of an image, while the values are set to higher values to increase the sharpness. Because the user has selected "upper level" in Table 2 above, the items in the sharpness category are set to higher values. Of course, the values are adjustable as necessary.

Referring back to FIG. 2, the signal input 240 inputs image signal provided from an image source. For example, the signal input 240 may preferably have a plurality of terminals or tuners to receive a variety of image signal such as, for example, a broadcasting signal from a broadcasting station, and a motion signal from a digital camera.

The signal processor 250 processes the image received from the signal input 240 into a displayable signal according to the desired image quality. The signal processor 250 then outputs the signal to the display part 260. When the apparatus for providing a question and answer screen is implemented as a digital device, the signal processor 250 is implemented as a DSP (Digital Signal Processor) and digitizes the image signal.

Additionally, the signal processor 250 includes a screen generator 252. The screen generator 252 generates a variety of OSD screens and processes the screens into displayable signals. Specifically, the screen generator 252 generates an initial OSD screen for image enhancement, and a question-and-answer screen including questions and answers.

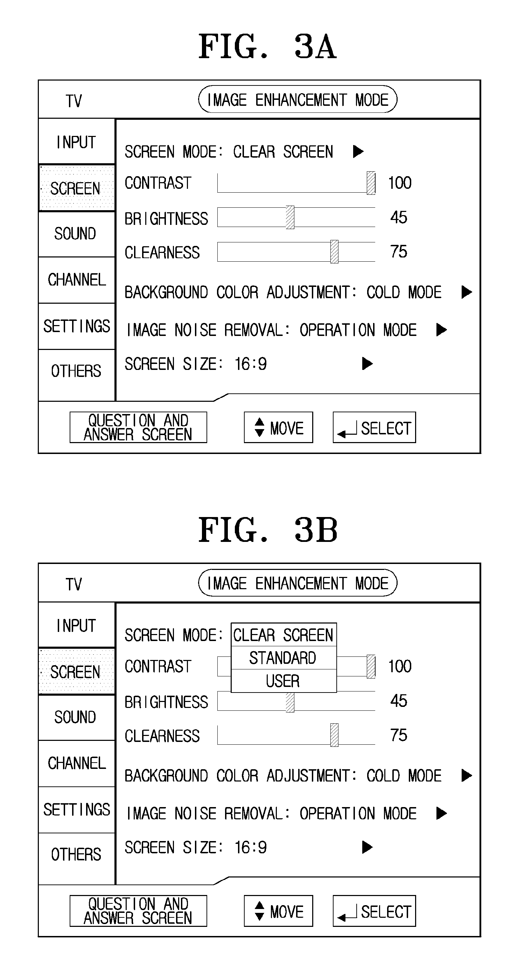

FIG. 3A illustrates one example of an initial OSD screen generated by a screen generator and provided by a display part, FIG. 3B illustrates one example of a setting SCREEN at the initial OSD screen, and FIG. 3C illustrates one example of accessing a question-and-answer screen from the initial OSD screen, which is provided as a user set mode.

Referring to FIG. 3A, upon request for an initial OSD screen from the user interface 210, the screen generator 252 generates an initial OSD screen, using the necessary data stored in the storage part 230. When the user selects "SCREEN" using the keys such as direction keys on the user interface 210 according to the exemplary embodiment of the invention, the operation directly enters into an image enhancement mode screen. The user then manipulates the user interface 210 to adjust a plurality of image enhancement items such as screen mode, luminance, brightness, sharpness, background color, noise removal, etc., so that the image can be displayed with a desired quality.

Referring to FIG. 3B, the user manipulates the user interface 210 and selects the SCREEN mode to change the mode of the screen. Accordingly, the screen generator 252 generates an OSD screen which indicates a plurality of screen modes such as "clear screen", "standard screen" and "user". The user manipulates the user interface 210 to finalize his selection of the screen mode.

Meanwhile, when the user manipulates the user interface 210 and selects "QUESTION/ANSWER" screen from the initial OSD, the screen generator 252 generates a question and answer OSD screen as exemplified in FIG. 3C. The question and answer OSD screen is generated upon entering into the QUESTION/ANSWER screen mode, and enables the user to improve image quality without having to go through complicated processes as shown in FIGS. 3A and 3B.

Referring to FIG. 3C, there are three options for each of the questions. The options are each leveled as lower/mid/upper. For example, the user may select "upper" level in response to the question, "Do you want a clear image?" if the user wants to have a clearer image. It will be understood by one of ordinary skill in the art that the number of levels are not limited to three.

When the options are selected for all of the questions, and "CONFIRM" is selected, the controller 270 controls the signal processor 250 to re-perform image processing based on the selections.

Alternatively, the image processing may be performed upon selection of the options for the questions, without requiring the "CONFIRM" item, to further improve the user's convenience.

Referring back to FIG. 2, the display part 260 displays image signal processed by the signal processor 250, and displays the initial OSD screen and question-and-answer screen which are generated by the screen generator 252. The display part 260 may be implemented as a variety of displays, such as LCD, plasma display, etc.

The controller 270 controls the overall operation of the apparatus 200 for providing a question-and-answer screen, according to the signal generated from the user interface 210 and predetermined control programs.

According to an exemplary embodiment of the present invention, in response to an initial screen display request signal output from the user interface 210, the controller 270 controls the storage part 230, the screen generator 252 and the display part 260 so that data can be read from the storage part 230 and the initial OSD screen such as the one shown in FIG. 3A can be displayed.

Additionally, when the "QUESTION/ANSWER" screen is selected from the initial OSD screen, the controller 270 controls the storage part 230, the screen generator 252 and the display part 260 so that the question-and-answer screen as shown in FIG. 3C can be displayed.

When the question-and-answer screen is displayed and the options for the questions are selected according to the manipulation of the user interface 210, the controller 270 controls the signal processor 250 so that image of the image signal can be re-processed based on the selections. Accordingly, the image is displayed through the display part 260 with the quality desired by the user. For example, when the user selects "upper", "upper" and "mid" levels for the first, the second and the third questions, respectively, the controller 270 controls the signal processor 250 to re-perform image processing based on the values set for the respective corresponding levels, for example as shown in Table 2. As a result, the image is displayed through the display part 260 with the quality desired by the user.

The controller 270 may control the storage part 230 to store the selections upon request by the user. The selections may be stored together with or without the existing options.

The controller 270 may also control the signal processor 250 to re-perform image processing based on the selections, immediately upon selecting the options for the questions through the question-and-answer screen.

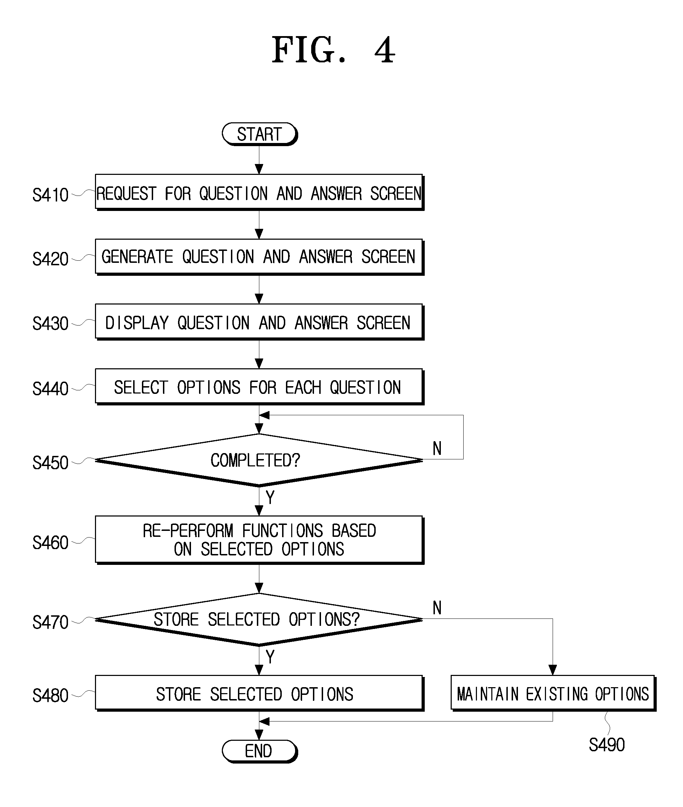

FIG. 4 is a flowchart illustrating the method of providing a question-and-answer screen according to an exemplary embodiment of the present invention.

Referring to FIGS. 2 through 4, in response to a request signal for a question-and-answer screen received from the user interface 210, the controller 270 controls the screen generator 252 to generate a question-and-answer screen, using the related data stored in the storage part 230 in operations S410 and S420. In other words, the controller 270 reads data related with the question-and-answer screen from the storage part 230, provides the screen generator 252 with the read data, and controls the screen generator 252 to generate a question-and-answer screen by processing the data into a displayable signal, and provides the display part 260 with the question-and-answer screen. The screen generator 252 OSD-processes the question-and-answer screen.

After operation S420, the controller 270 controls the display part 260 to display the generated question-and-answer screen in operation S430. As the question-and-answer screen is provided, the user is guided to easily set a desired image quality.

After operation S430, when the options for the questions and "CONFIRM" are subsequently selected, the controller 270 controls the signal processor 250 to re-perform image enhancement based on the selected options in operations S440, 450, 460. Accordingly, an image, which is signal-processed based on the options selected by the user, is displayed through the display part 260.

After operation S460, in response to a request by the user for storing the selected options, the controller 270 controls the storage part 230 to update options with the selections made by the user, in operations S470 and S480.

In the absence of the storing request from the user, however, the controller 270 controls the storage part 230 to maintain the existing options, in operation S490.

Accordingly, the user can easily set a desired image quality by using the OSD screens as exemplified in FIGS. 3A and 3B, or by using one question-and-answer screen as exemplified in FIG. 3C.

Although the above exemplary embodiments have taken a function of image enhancement as an example, the question-and-answer screen may be used for a variety of purposes such as sound or channel adjustments and as such provide analogous user convenience.

According to an exemplary embodiment of the present invention, question-and-answer screens may be allocated for respective users. For example, a user identification menu may be provided prior to the question-and-answer screen, and different options may be stored for the users identified by the user identification and used to perform functions as desired by the respective users.

With an apparatus for and a method of providing a question-and-answer screen according to the exemplary embodiments of the present invention, a plurality of questions for adjustment of the functions as provided by the product, and options for the plurality of questions are directly provided to the users so that users can easily adjust the functions.

Particularly, because a plurality of items used to adjust the functions are integrated into questions, and function adjustments from multi-screens or stages are combined into one screen, user convenience is improved.

Furthermore, by storing the questions and the options according to each user, functions can be provided in consideration of individual preferences of the users.

Furthermore, because image processing is re-performed by reflecting the selected options immediately upon selecting the options for the questions, user convenience is also improved.

Furthermore, because a manufacturer easily knows the consumer preferences on the image quality, while improving the consumer satisfaction, costs for a consumer preference survey can be reduced.

The foregoing exemplary embodiments are merely exemplary and are not to be construed as limiting the present invention. The present teaching can be readily applied to other types of apparatuses. Also, the description of the exemplary embodiments of the present invention is intended to be illustrative only, and not to limit the scope of the claims, as many alternatives, modifications, and variations will be apparent to those skilled in the art.

Therefore, the scope of the present invention should be defined by the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for providing a question-and-answer screen, comprising:
a storage part (120) which is operable to store a plurality of questions related to at least one of an image quality adjustment and a sound quality adjustment and a plurality of options corresponding to the plurality of questions;
a screen generator (130) which is operable to generate a question-and-answer screen comprising the plurality of questions and the corresponding plurality of options; and
a signal processor (250) which is operable to adjust at least one of the image and sound based on the options which are selected through the question-and-answer screen.

2. The apparatus of claim 1, wherein the storage part (120) is operable to store at least one item related to each of the questions, and a value set for the at least one item.

3. The apparatus of claim 2, wherein the plurality of questions are generated by combining the at least one item related to the questions, and the plurality of options are generated by combining the value set for the at least one item.

4. The apparatus of claim 2, wherein the plurality of questions and the plurality of options are stored in the storage part (120) in a form of a lookup table.

5. The apparatus of any preceding claim, further comprising a controller (140) which is operable to control the storage part (120) so that the selected options are stored in the storage part (120).

6. The apparatus of any preceding claim, wherein the plurality of options corresponding to each of the plurality of questions are expressed by at least two hierarchical levels.

7. The apparatus of claim 6, wherein the at least two hierarchical levels are expressed by at least one of: high/low, strong/weak, and upper/lower.

8. The apparatus of any preceding claim, wherein the screen generator (130) generates the question-and-answer screen as an on-screen display menu.

9. The apparatus of any preceding claim, wherein the question-and-answer screen, which is signal-processed, is displayed through one of: a built-in display and a removable display.

10. The apparatus of any preceding claim, wherein the plurality of questions related to the image adjustment are provided to adjust luminance, brightness, contrast, sharpness, noise, low tone, white balance and color.

11. A method of providing a question-and-answer screen, comprising:
receiving a request signal requesting a question-and-answer screen comprising a plurality of questions related to at least one of: an image quality adjustment and a sound quality adjustment, and a plurality of options corresponding to each of the plurality of questions;
processing the requested question-and-answer screen into a displayable signal;
displaying the processed question-and-answer screen;
selecting at least one option from the plurality of options for each of the plurality of questions through the displayed question-and-answer screen; and
performing at least one of the image quality adjustment and the sound quality adjustment based on the selected options.

12. The method of claim 11, wherein the plurality of questions are generated by combining the at least one item related to the questions, and the plurality of options are generated by combining the values set for the at least one item.

13. The method of claim 11, wherein the plurality of options for each of the plurality of questions are expressed by at least two hierarchical levels.

14. The method of claim 13, wherein the at least two hierarchical levels are expressed by at least one of: high/low, strong/weak and upper/lower.

15. The method of any one of claims 11 to 14, wherein the question-and-answer screen is generated as an on-screen display menu.

16. The method of any one of claims 11 to 15, wherein the plurality of questions related to the image adjustment are provided to adjust luminance, brightness, contrast, sharpness, noise, low tone, white balance and color.

17. The method of any one of claims 11 to 16, further comprising storing the options selected for each of the questions.

18. A user interface implemented on a display of a television, comprising:
a question-and-answer screen for displaying a plurality of questions related to at least one of image quality adjustment and sound quality adjustment,
wherein for each of the displayed plurality of questions, a plurality of options are displayed, and
wherein the at least one of the image quality and the sound quality is adjusted by a user selecting at least one option corresponding to each of the displayed plurality of questions.

19. The user interface according to claim 18, further comprising an initial screen displaying at least one of: a plurality of image quality adjusting items and a plurality of sound quality adjusting items.
